# EUROPÄISCHE PATENTSCHRIFT

(11) **EP 3 760 790 B1**
(45) Veröffentlichungstag und Bekanntmachung des Hinweises auf die Patenterteilung: **05.10.2022**
(21) Anmeldenummer: 20181844.0
(22) Anmeldetag: 24.06.2020
(51) Int. Cl.: E01C 19/00, E01C 19/48

(54) **SELBSTFAHRENDE BAUMASCHINE UND VERFAHREN ZUM STEUERN EINER SELBSTFAHRENDEN BAUMASCHINE**
SELF-PROPELLED CONSTRUCTION MACHINE AND METHOD FOR CONTROLLING THE SAME
ENGIN DE CONSTRUCTION ET PROCÉDÉ DE COMMANDE D'UN ENGIN DE CONSTRUCTION

(30) Priorität: 04.07.2019 DE 102019118059
(43) Veröffentlichungstag der Anmeldung: 06.01.2021
(73) Patentinhaber: Wirtgen GmbH, 53578 Windhagen (DE)
(72) Erfinder: FRITZ, Matthias, 53773 Hennef (DE)
(74) Vertreter: Oppermann, Frank

(56) Entgegenhaltungen:
- EP-A1- 2 620 547
- EP-A1- 2 719 829
- EP-A2- 2 336 424
- EP-B1- 1 103 659
- US-A- 3 602 115

## Beschreibung

Die Erfindung betrifft eine selbstfahrende Baumaschine, die über eine Antriebseinrichtung mit einem linken und einem rechten Kettenlaufwerk verfügt, insbesondere einen Gleitschalungsfertiger, und ein Verfahren zum Steuern einer selbstfahrenden Baumaschine, insbesondere eines Gleitschalungsfertigers.

Die bekannten selbstfahrenden Baumaschinen zeichnen sich dadurch aus, dass sie über eine an einem Maschinenrahmen angeordnete Arbeitseinrichtung zur Errichtung von Baukörpern auf einem Gelände oder zum Verändern des Geländes verfügen. Bei den bekannten Gleitschalungsfertigern umfasst die Arbeitseinrichtung eine Vorrichtung zum Formen von fließfähigem Material, insbesondere Beton, die nachfolgend als Betonmulde bezeichnet wird. Mit der Betonmulde können Baukörper unterschiedlicher Ausbildung, beispielsweise Leitwände oder Verkehrsinseln hergestellt werden. Ein Gleitschalungsfertiger ist beispielsweise in der EP 1 103 659 B1 beschrieben.

Selbstfahrende Baumaschinen verfügen über Laufwerke, insbesondere Kettenlaufwerke, die an der in Arbeitsrichtung linken und rechten Seite des Maschinenrahmens angeordnet sind, sowie eine Antriebseinrichtung zum Antreiben der Laufwerke, so dass die Baumaschine auf dem Gelände translatorische und/oder rotatorische Bewegungen ausführen kann.

Bei selbstfahrenden Baumaschinen wird eine weitgehend automatische Steuerung ohne nennenswerte Eingriffe des Fahrzeugführers angestrebt. Bei der automatischen Steuerung der Baumaschine wird die Antriebeinrichtung derart gesteuert, dass sich ein beliebiger Referenzpunkt in Bezug auf die Baumaschine auf einer vorgegebenen Bahn bewegt. Die vorgegebene Bahn kann gerade und/oder gekrümmte Abschnitte umfassen.

Ein bekanntes Verfahren zum Steuern selbstfahrender Baumaschinen setzt den Einsatz eines Leitdrahtes voraus, mit dem die Bahn bzw. eine Äquidistante zu der Bahn festgelegt wird. Es ist auch bekannt, selbstfahrende Baumaschinen unter dem Einsatz eines globalen Navigationssatellitensystems (GNSS) zu steuern. Die EP 2 620 547 A1 beschreibt eine Baumaschine mit einer Steuerung der Antriebseinrichtung unter dem Einsatz eines Leitdrahtes und die EP 2 336 424 A1 beschreibt eine Baumaschine mit einer Steuerung der Antriebseinrichtung unter dem Einsatz eines globalen Navigationssatellitensystems (GNSS).

Bei der automatischen Steuerung von Baumaschinen stellt sich das Problem, dass sich die Baumaschine bei der Kurvenfahrt so bewegen soll, dass sich die Arbeitseinrichtung immer an der richtigen Position und in korrekter Ausrichtung befindet, um beispielsweise mit einem Gleitschalungsfertiger einen Baukörper an der richtigen Position in korrekter Ausrichtung errichten zu können.

Die selbstfahrenden Baumaschinen, die über ein in Arbeitsrichtung vorderes linkes und rechtes Laufwerk und ein hinteres linkes und rechtes Laufwerk verfügen, lassen sich so lenken, dass sie der vorgegebenen Bahn in der gewünschten Ausrichtung mit hinreichender Genauigkeit folgen können. Für die Steuerung der vorderen Laufwerke kann ein vorderer Referenzpunkt und für die Steuerung der hinteren Laufwerke kann ein hinterer Referenzpunkt festgelegt werden, wobei die vorderen bzw. hinteren Laufwerke derart angesteuert werden können, dass sich sowohl der vordere als auch hintere Referenzpunkt auf der vorgegebenen Bahn bewegt. Mit der getrennten Ansteuerung der vorderen und hinteren Laufwerke kann die gewünschte Ausrichtung der Baumaschine bei der Kurvenfahrt beibehalten werden.

Bei Baumaschinen, die nur über ein linkes und rechtes Kettenlaufwerk verfügen, ist die Lenkbarkeit hingegen eingeschränkt. Daher stellt sich bei der Steuerung der Antriebeinrichtung von Baumaschinen mit nur einem linken und rechten Kettenlaufwerk in der Praxis das Problem, dass sich ein der Steuerung zugrunde liegender in Arbeitsrichtung vorzugsweise vorderer Referenzpunkt in Bezug auf die Baumaschine zwar auf der vorgegebenen Bahn bewegt, ein hinterer Referenzpunkt aber nicht der vorgegebenen Bahn folgt. Wenn die Baumaschine ein Gleitschalungsfertiger ist, kann somit das hintere Ende der Gleitschalung nicht der vorgegebenen Bahn folgen, so dass sich das zu errichtende Bauwerk oder Teile davon später nicht am richtigen Ort befinden.

Der Erfindung liegt die Aufgabe zugrunde, eine selbstfahrende Baumaschine mit einem linken und rechten Kettenlaufwerk, insbesondere einen Gleitschalungsfertiger, zu schaffen, welche einer vorgegebenen Bahn im Gelände in der gewünschten Ausrichtung folgt. Darüber hinaus ist eine Aufgabe der Erfindung, ein Verfahren zur Steuerung einer selbstfahrenden Baumaschine mit einem linken und rechten Kettenlaufwerk, insbesondere eines Gleitschalungsfertiger, anzugeben, mit dem die selbstfahrende Baumaschine der vorgegebenen Bahn in korrekter Ausrichtung folgt.

Die erfindungsgemäße selbstfahrende Baumaschine, insbesondere Gleitschalungsfertiger, umfasst einen Maschinenrahmen, eine am Maschinenrahmen angeordnete Arbeitseinrichtung, ein einziges in Arbeitsrichtung linkes Kettenlaufwerk und ein einziges in Arbeitsrichtung rechtes Kettenlaufwerk und eine Antriebseinrichtung zum Antreiben des linken Kettenlaufwerks mit einer vorgegebenen Kettengeschwindigkeit und des rechten Kettenlaufwerks mit einer vorgegebenen Kettengeschwindigkeit. Darüber hinaus weist die Baumaschine eine Steuer- und Recheneinheit auf, die derart konfiguriert ist, dass in Abhängigkeit von dem Abstand zwischen einem in Bezug auf den Maschinenrahmen in Arbeitsrichtung vorderen Referenzpunkt und einer vorgegebenen Bahn die Kettengeschwindigkeit des linken Kettenlaufwerks und/oder die Kettengeschwindigkeit des rechten Kettenlaufwerks derart vorgegeben wird, dass sich der vordere Referenzpunkt auf der vorgegebenen Bahn bewegt.

In diesem Zusammenhang wird unter einer vorgegebenen Bahn eine beliebige Linie verstanden, die gerade und/oder gekrümmte Abschnitte aufweisen kann. Der Referenzpunkt kann ein beliebiger Punkt an der Baumaschine, beispielsweise am Maschinenrahmen, oder neben der Baumaschine sein. Unter einer Steuerung derart, dass sich der Referenzpunkt auf bzw. entlang einer vorgegebenen Bahn bewegt, wird eine Steuerung verstanden, die darauf abzielt, dass die Abweichung zwischen der momentanen Position des Referenzpunktes und der gewünschten Position minimal ist, d. h. der Referenzpunkt braucht nicht exakt auf der vorgegebenen Bahn liegen, was in der Praxis auch nicht der Fall sein wird. Unter einem vorderen Referenzpunkt wird ein Referenzpunkt verstanden, der in Arbeitsrichtung vor einem hinteren Referenzpunkt liegt. Der vordere Referenzpunkt liegt vorzugsweise in einem vorderen Bereich der Baumaschine, insbesondere im Bereich der vorderen Laufrollen bzw. Laufrolle des vorderen Kettenlaufwerks, während der hintere Referenzpunkt vorzugsweise in einem hinteren Bereich der Baumaschine liegt.

Eine Steuerung auf der Grundlage nur des vorderen Referenzpunktes führt dazu, dass der hintere Referenzpunkt bei einer Kurvenfahrt der Baumaschine nicht der vorgegebenen Bahn folgt. Die Steuer- und Recheneinheit der erfindungsgemäßen Baumaschine ist daher derart konfiguriert, dass während einer Kurvenfahrt in Abhängigkeit von dem Abstand zwischen einem in Bezug auf den Maschinenrahmen in Arbeitsrichtung hinteren Referenzpunkt und der vorgegebenen Bahn eine Korrektur der Steuerung derart vorgenommen wird, dass sich der Abstand zwischen dem in Bezug auf den Maschinenrahmen in Arbeitsrichtung hinteren Referenzpunkt und der vorgegebenen Bahn verringert. Folglich wird die Abweichung des hinteren Referenzpunktes von der vorgegebenen Bahn erfasst. Die Korrektur der Steuerung kann mit einer gezielten Lenkbewegung erfolgen, die zwar den vorderen Referenzpunkt von der vorgegebenen Bahn abkommen lässt, den hinteren Referenzpunkt aber in Richtung der vorgegebene Bahn bewegen lässt, so dass in Bezug auf den hinteren Referenzpunkt der Abstand zu der vorgegebenen Bahn verringert wird. Dabei wird davon ausgegangen, dass eine möglichst geringe Abweichung des hinteren Referenzpunktes von der vorgegebenen Bahn für ein optimales Arbeitsergebnis entscheidend ist.

Eine bevorzugte Ausführungsform der erfindungsgemäßen Baumaschine sieht vor, dass die Steuer- und Recheneinheit derart konfiguriert ist, dass während einer Kurvenfahrt der Baumaschine für die Steuerung der Baumaschine in Abhängigkeit von dem Abstand zwischen einem in Bezug auf den Maschinenrahmen in Arbeitsrichtung vorderen Referenzpunkt und einer vorgegebenen Bahn eine korrigierte Bahn angenommen wird. Folglich wird der Steuerung als vorgegebene Bahn eine korrigierte Bahn zugrunde gelegt. Die korrigierte Bahn verläuft zu der ursprünglich vorgegebenen Bahn in einem vorgegebenen Abstand, der von dem Abstand zwischen dem in Bezug auf den Maschinenrahmen in Arbeitsrichtung hinteren Referenzpunkt und der ursprünglich vorgegebenen Bahn abhängig ist. Dabei führt ein größerer Abstand des hinteren Referenzpunktes von der ursprünglich vorgegebenen Bahn zu einer größeren Korrektur als ein kleinerer Abstand, um den hinteren Referenzpunkt in Richtung der ursprünglich vorgegebenen Bahn zu bewegen.

Die Korrektur kann bei der vorgesehenen Steuerung durch die Vorgabe eines korrigierten Soll-Wertes, d. h. eines auf der korrigierten Bahn liegenden Punktes, erfolgen, der mit einem Ist-Wert, d. h. der momentanen Position des vorderen Referenzpunktes verglichen wird, um die Regelabweichung, d. h. den Abstand des vorderen Referenzpunktes von der korrigierten Bahn, zu bestimmen.

Für die Steuerung kann eine geeignete Korrekturfunktion ermittelt werden. Der Abstand zwischen der korrigierten Bahn und vorgegebenen Bahn kann der mit einem Korrekturfaktor verrechnete Abstand zwischen dem in Bezug auf den Maschinenrahmen in Arbeitsrichtung hinteren Referenzpunkt und der vorgegebenen Bahn sein. Beispielsweise kann für die Korrektur ein geeigneter Offset vorgegeben werden.

Die Lenkkorrektur ist davon abhängig, ob die Baumaschine eine Linkskurve oder eine Rechtskurve fährt. Während der Kurvenfahrt wird für die Steuerung der Baumaschine in Abhängigkeit von dem Abstand zwischen einem in Bezug auf den Maschinenrahmen in Arbeitsrichtung vorderen Referenzpunkt und einer vorgegebenen Bahn eine korrigierte Bahn angenommen wird, die in einem Abstand zu der vorgegebenen Bahn auf der kurveninneren Seite der vorgegebenen Bahn verläuft. Dies setzt aber voraus, dass der hintere Referenzpunkt in Arbeitsrichtung der Baumaschine hinter dem Drehpunkt der Baumaschine liegt. Wenn der Drehpunkt idealerweise im Zentrum der Baumaschine liegt, muss sich der hintere Referenzpunkt also in der hinteren Maschinenhälfte befinden. Folglich wird unter dieser Bedingung bei einer Linkskurve zunächst eine Lenkkorrektur nach links und bei einer Rechtskurve zunächst eine Lenkkorrektur nach rechts vorgenommen. Wenn sich der hintere Referenzpunkt hingegen in Arbeitsrichtung der Baumaschine vor dem Drehpunkt der Baumaschine befinden sollte, wird bei einer Linkskurve eine Lenkkorrektur nach rechts und bei einer Rechtskurve eine Lenkkorrektur nach links vorgenommen.

Die Antriebseinrichtung der Baumaschine kann beispielsweise ein zentrales Schaltgetriebe und ein Überlagerungsgetriebe umfassen. Alternativ kann auch ein Antrieb mit zwei Antriebssträngen, die jeweils ein Getriebe aufweisen, vorgesehen sein. Die Steuer- und Recheneinheit ist derart konfiguriert, dass für eine Lenkkorrektur während der Fahrt in eine Linkskurve die Kettengeschwindigkeit des kurvenäußeren, rechten Kettenlaufwerks erhöht und/oder die Kettengeschwindigkeit des kurveninneren, linken Kettenlaufwerks verringert wird. Die Steuer- und Recheneinheit ist weiterhin derart konfiguriert, dass für eine Lenkkorrektur während der Fahrt in eine Rechtskurve die Kettengeschwindigkeit des kurveninneren, linken Kettenlaufwerks erhöht und/oder die Kettengeschwindigkeit des kurvenäußeren, rechten Kettenlaufwerks verringert wird.

Die Festlegung des Verlaufs der vorgegebenen Bahn und die Erfassung des Abstandes zwischen dem vorderen und hinteren Referenzpunkt und der vorgegebenen Bahn kann auf unterschiedlicher Weise erfolgen.

Ein bevorzugte Ausführungsform sieht die Verwendung eines Leitdrahtes vor, der in einem definierten Abstand (Äquidistante) zu der vorgegebenen Bahn, verlegt wird. Bei der Verwendung eines Leitdrahtes umfasst die Steuer- und Recheneinheit eine erste Abstandsmesseinrichtung, die einen ersten Abstandssensor aufweist, der an dem vorderen Referenzpunkt angeordnet ist, wobei die erste Abstandsmesseinrichtung derart ausgebildet ist, dass der Abstand zwischen dem vorderen Referenzpunkt und dem die vorgegebene Bahn beschreibenden Leitdraht messbar ist. Darüber hinaus umfasst die Steuer- und Recheneinheit eine zweite Abstandsmesseinrichtung, die einen zweiten Abstandssensor aufweist, der an dem hinteren Referenzpunkt angeordnet ist, wobei die zweite Abstandsmesseinrichtung derart ausgebildet ist, dass der Abstand zwischen dem hinteren Referenzpunkt und dem Leitdraht messbar ist. Die Abstandssensoren können taktile Sensoren oder berührungslose Sensoren sein, mit denen der Leitdraht während des Vorschubs der Baumaschine abgetastet wird. Derartige Abtastsysteme gehören zum Stand der Technik.

Eine alternative Ausführungsform sieht die Verwendung eines globalen Navigationssatellitensystems (GPS) vor. Bei der Verwendung eines globalen Navigationssatellitensystems (GPS) weist die Steuer- und Recheneinheit einen ersten GPS-Empfänger und einen zweiten GPS-Empfänger zum Empfangen von GPS-Satellitensignalen auf.

Die Steuer- und Recheneinheit kann derart konfiguriert sein, dass mit dem ersten GPS-Empfänger und mit dem zweiten GPS-Empfänger die Position und Ausrichtung der Baumaschine bestimmt werden. Aufgrund der bekannten Geometrie der Maschine können somit die Positionen des vorderen und hinteren Referenzpunktes bestimmt werden. Die Steuer- und Recheneinheit kann weiterhin derart konfiguriert sein, dass aus die vorgegebene Bahn beschreibenden Daten und den aus den Signalen des ersten GPS-Empfängers und des zweiten GPS-Empfängers und der daraus bestimmten Position des vorderen Referenzpunktes der Abstand zwischen dem vorderen Referenzpunkt und der vorgegebenen Bahn, und aus die vorgegebene Bahn beschreibenden Daten und den aus den Signalen des ersten GPS-Empfängers und des zweiten GPS-Empfängers und der daraus bestimmten Position des hinteren Referenzpunktes der Abstand zwischen dem hinteren Referenzpunkt und der vorgegebenen Bahn ermittelt wird. Die GPS-Empfänger sind vorzugsweise DGPS-Empfänger, die Korrektursignale einer Referenzstation dekodieren, um die Genauigkeit der Positionsbestimmung zu erhöhen.

Alternativ ist es möglich, den ersten GPS-Empfänger auf dem vorderen Referenzpunkt zu positionieren und/oder den zweiten GPS-Empfänger auf dem hinteren Referenzpunkt zu positionieren. Auf diesem Wege können die Positionen des vorderen und/oder hinteren Referenzpunktes und der Abstand des vorderen und/oder hinteren Referenzpunktes von der vorgegebenen Bahn direkt ermittelt werden.

Die Vorteile der Erfindung kommen insbesondere bei einem Gleitschalungsfertiger zum Tragen, dessen Arbeitseinrichtung eine Gleitschalung ist. Bei einem Gleitschalungsfertiger ist für ein optimales Arbeitsergebnis entscheidend, dass das hintere Ende der Gleitschalung, an der der Beton austritt, sich entlang einer vorgegebenen Bahn bewegt, die dem Verlauf des zu errichtenden Baukörpers, beispielsweise eine Leitwand, entspricht. Der hintere Referenzpunkt liegt bei einem Gleitschalungsfertiger daher auf der Höhe des in Arbeitsrichtung hinteren Endes der Gleitschalung. Der hintere Referenzpunkt kann am hinteren Ende der Gleitschalung auf der Längsachse oder auf der linken oder rechten Seite der Längsachse liegen.

Im Folgenden wird ein Ausführungsbeispiel der Erfindung unter Bezugnahme auf die Figuren im Einzelnen erläutert.

Es zeigen:
- Fig. 1: ein Ausführungsbeispiel eines Gleitschalungsfertigers in stark schematischer Darstellung,
- Fig. 2A bis 2D: die Positionen des Gleitschalungsfertigers während der Bewegung auf einer vorgegebenen Bahn zu den Zeitpunkten to bis t₃, wobei sich ein vorderer und hinterer Referenzpunkt exakt auf der vorgegebenen Bahn bewegt,
- Fig. 3A bis 3F: die Positionen des Gleitschalungsfertigers zu den Zeitpunkten to bis t₆, wobei eine Lenkkorrektur nicht vorgenommen wird,
- Fig. 4A bis 4J: die Positionen des Gleitschalungsfertigers zu den Zeitpunkten to bis t₉, wobei eine Lenkkorrektur vorgenommen wird, und
- Fig. 5: einen Gleitschalungsfertiger, der eine Rechtskurve fährt.

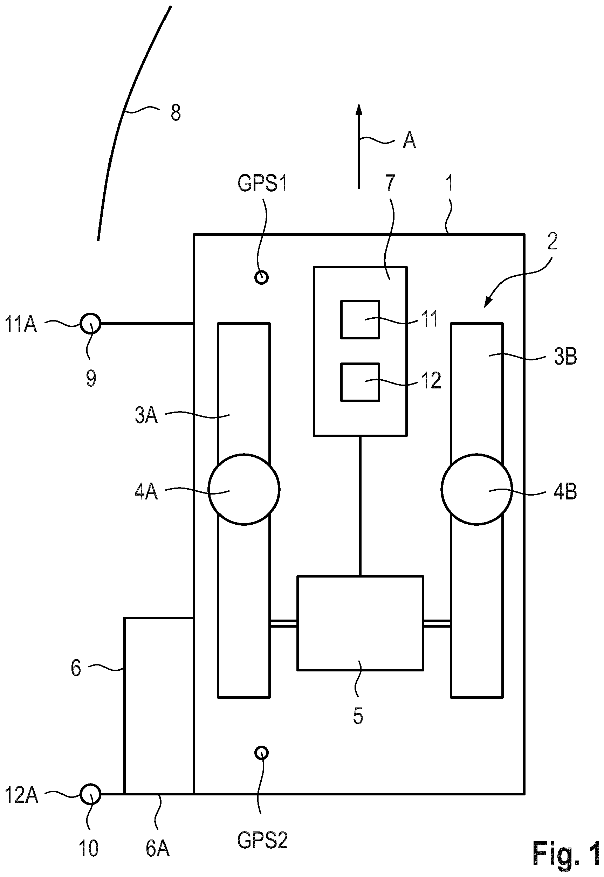

Fig. 1 zeigt als Beispiel für eine selbstfahrende Baumaschine die wesentlichen Komponenten eines Gleitschalungsfertigers in einer stark vereinfachten schematischen Darstellung. Da Gleitschalungsfertiger als solche zum Stand der Technik gehören, werden hier nur die für die Erfindung wesentlichen Komponenten der Baumaschine beschrieben.

Der Gleitschalungsfertiger weist einen Maschinenrahmen 1 auf, der von einem Fahrwerk 2 getragen wird. Das Fahrwerk 2 weist ein in Arbeitsrichtung linkes Kettenlaufwerk 3A und ein in Arbeitsrichtung rechtes Kettenlaufwerk 3B auf, die an dem Maschinenrahmen mittels linken und rechten Hubeinrichtungen 4A, 4B befestigt sind. Die linken und/oder rechten Hubeinrichtungen 4A, 4B können jeweils mehrere Hubsäulen umfassen. Durch Anheben und Absenken der Hubeinrichtungen 4A, 4B kann der Maschinenrahmen 1 gegenüber dem Boden in der Höhe und Neigung bewegt werden. Die Arbeitsrichtung (Fahrtrichtung) des Gleitschalungsfertigers ist mit einem Pfeil A gekennzeichnet.

Zum Antrieb des linken und rechten Kettenlaufwerks 3A, 3B weist der Gleitschalungsfertiger eine Antriebeinrichtung 5 auf, die beispielsweise ein zentrales Schaltgetriebe und ein Überlagerungsgetriebe oder zwei getrennte Antriebsstränge mit jeweils einem Getriebe umfassen kann, so dass das linke und rechte Kettenlaufwerk jeweils mit einer vorgegebenen Kettengeschwindigkeit (Drehzahl) angetrieben werden können.

Der Gleitschalungsfertiger verfügt über eine nur andeutungsweise dargestellte Vorrichtung 6 zum Formen von fließfähigem Material, insbesondere Beton, die nachfolgend als Betonmulde 6 bezeichnet wird. Der Beton tritt am hinteren Ende 6A der Betonmulde 6 aus.

Darüber hinaus weist der Gleitschalungsfertiger eine Steuer- und Recheneinheit 7 auf, die eine eigenständige Baugruppe bilden oder in die Maschinensteuerung integriert sein kann. Die Steuer- und Recheneinheit 7 kann aus mehreren Baugruppen bestehen, die sich nicht nur auf sondern auch neben der Baumaschine befinden können.

Die Steuer- und Recheneinheit 7 ist derart konfiguriert, dass die Kettengeschwindigkeiten des linken und rechten Kettenlaufwerks 3A, 3B vorgegeben werden können. Wenn die Kettengeschwindigkeiten des rechten und linken Kettenlaufwerks gleich sind, fährt der Gleitschalungsfertiger geradeaus. Eine Kurvenfahrt erfolgt aufgrund unterschiedlicher Kettengeschwindigkeiten, wobei der Kurvenradius durch die Differenz der Kettengeschwindigkeiten bestimmt wird. Folglich kann der Gleitschalungsfertiger mit der Steuer- und Recheneinheit 7 derart gesteuert werden, dass sich der Gleitschalungsfertiger auf einer vorgegebenen Bahn 8 bewegt. Diese Bahn 8 entspricht der Form des zu errichtenden Baukörpers und kann gerade und/oder gekrümmte Abschnitte aufweisen.

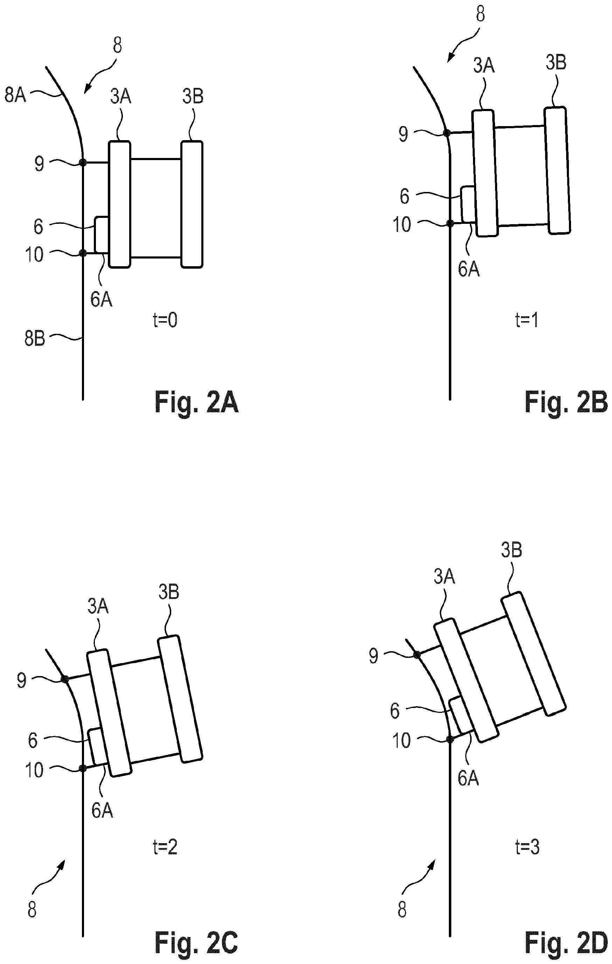

Die Figuren 2A bis 2D zeigen die Bewegung des Gleitschalungsfertigers im Gelände auf einer vorgegebenen Bahn 8, die einen geraden Abschnitt 8A (Kurve) und einen gekrümmten Abschnitt 8B (Gerade) umfasst. In den Figuren 2A bis 2D sind nur das linke und rechte Kettenlaufwerk 3A, 3B sowie die Gleitschalung 6 schematisch dargestellt. Die Antriebeinrichtung 5 des Gleitschalungsfertigers wird derart angesteuert, dass sich der Gleitschalungsfertiger während des Vorschubs möglichst exakt auf bzw. entlang der vorgegebenen Bahn 8 bewegt. Für eine stabile Steuerung wird ein Referenzpunkt 9 vorgegeben, der im vorderen Bereich des Gleitschalungsfertigers liegt. Der Abstand des vorderen Referenzpunktes 9 zu der vorgegebenen Bahn 8 sollte möglichst klein sein, d. h. der vordere Referenzpunkt sollte sich exakt auf der vorgegebenen Bahn bewegen. Für ein optimales Arbeitsergebnis ist aber entscheidend, dass sich auch ein hinterer Referenzpunkt 10, der auf der Höhe des hinteren Endes 6A der Gleitschalung 6 liegt, an der der Beton austritt, exakt auf der vorgegebenen Bahn 8 bewegt. Die Figuren 2A bis 2D zeigen diesen Idealfall, der aber mit dem erfindungsgemäßen Gleitschalungsfertiger, der nur über ein linkes und rechtes Kettenlaufwerk 3A, 3B verfügt, wegen der eingeschränkten Lenkbarkeit nicht zu erreichen ist.

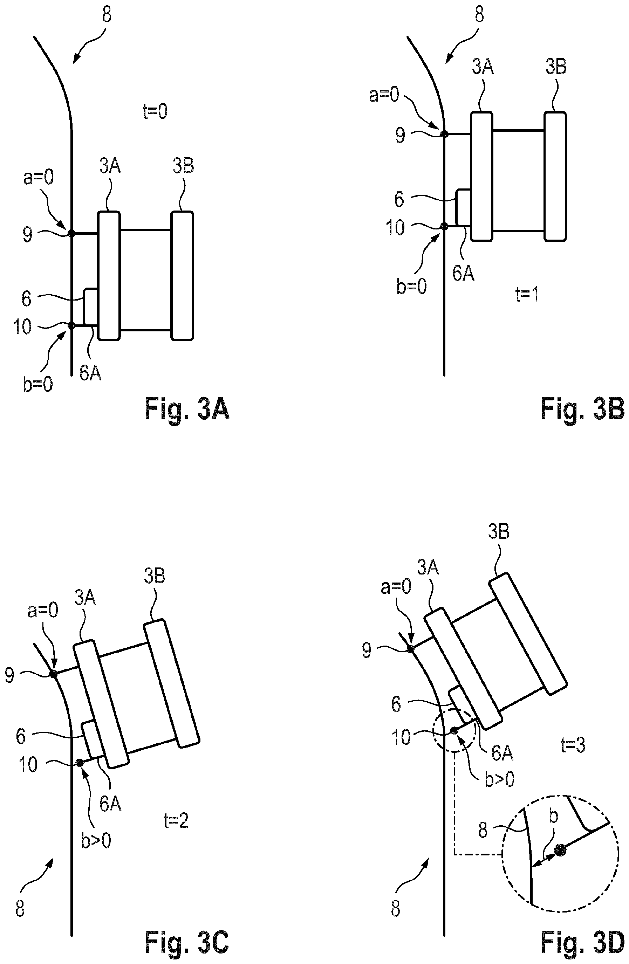

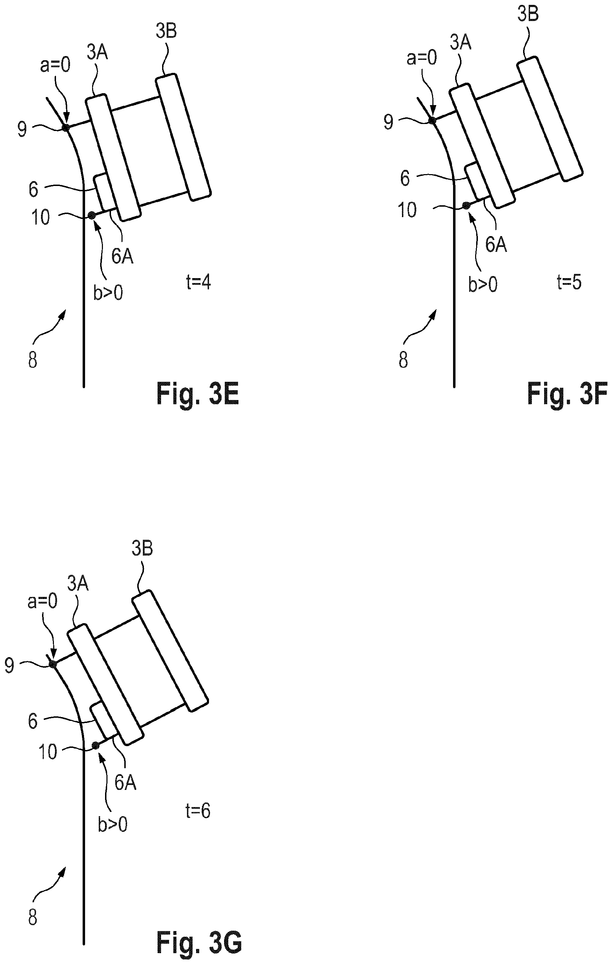

Die Figuren 3A bis 3F zeigen eine Steuerung auf der Grundlage des Abstandes a des vorderen Referenzpunktes 9 und der vorgegebenen Bahn 8. In den Figuren 3A bis 3F ist die Position der Baumaschine zu den aufeinanderfolgenden Zeitpunkten t=0 bis t=6 dargestellt. Es zeigt sich, dass sich der vordere Referenzpunkt 9 auf der vorgegebenen Bahn 8 bewegt. Daher ist der Abstand a= 0. Der hintere Referenzpunkt 10 kann aber der vorgegebenen Bahn 8 nicht folgen. Es zeigt sich, dass bei einer Linkskurve der hintere Referenzpunkt 10 zu der kurvenäußeren Seite, d. h. nach rechts, abdriftet, so dass der Abstand b größer Null ist und sich das hintere Ende 6A der Gleitschalung 6 nicht am richtigen Ort befindet (Fig. 3C und Fig. 3D).

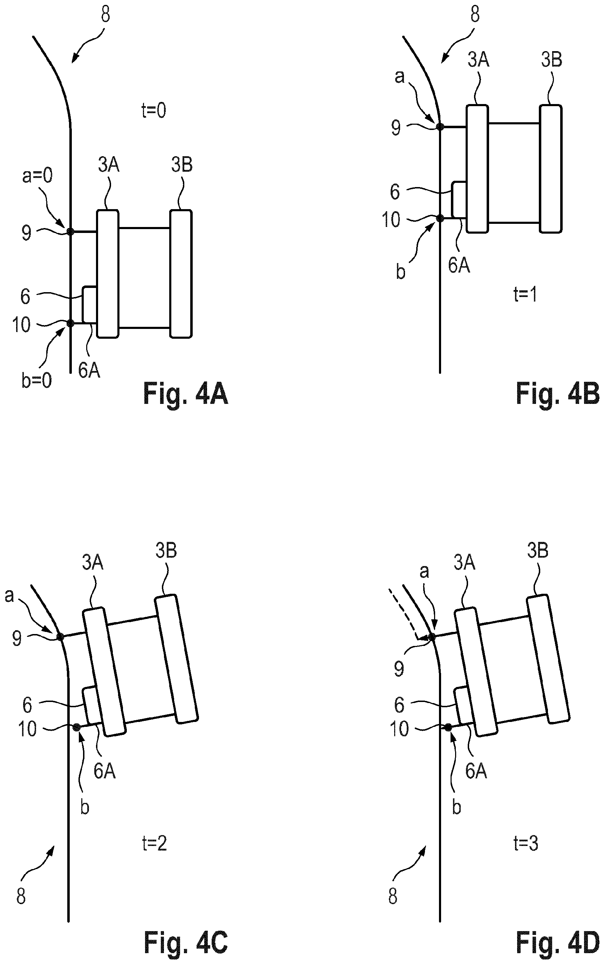

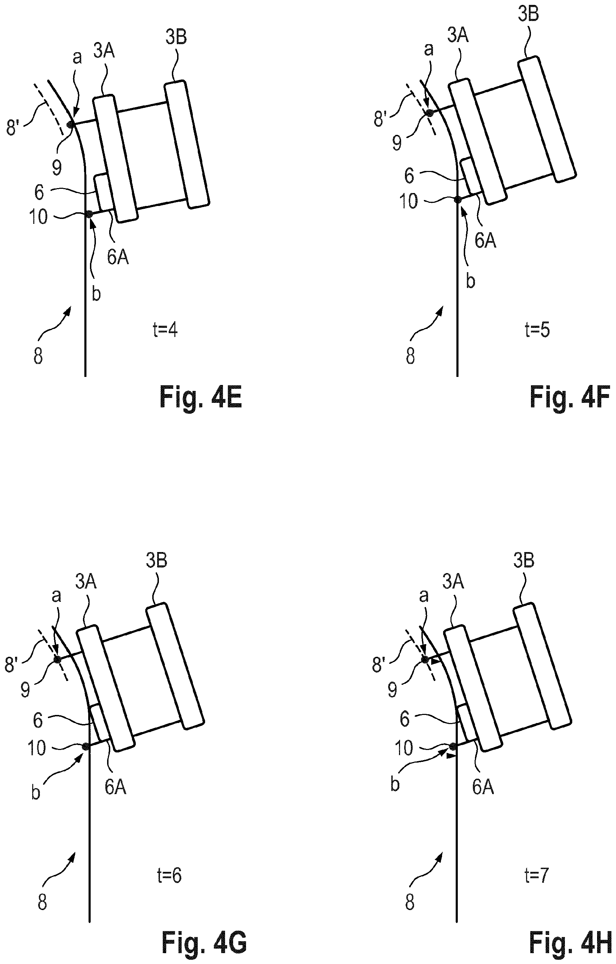

Nachfolgend wird die erfindungsgemäße Steuerung unter Bezugnahme auf die Figuren 4A bis 4J beschrieben. In den Figuren 4A bis 4J ist die Position der Baumaschine zu den aufeinanderfolgenden Zeitpunkten t=0 bis t=9 dargestellt.

Die Steuer- und Recheneinheit 7 weist eine erste und eine zweite Abstandsmesseinrichtung 11 und 12 auf, um den Abstand zwischen dem vorderen und hinteren Referenzpunkt 9, 10 und der vorgegebenen Bahn 8 bestimmen zu können (Fig. 1). Bei dem vorliegenden Ausführungsbeispiel wird die Bahn 8 durch einen Leitdraht vorgegeben, der im Gelände gespannt wird.

Die erste Abstandsmesseinrichtung 11 weist einen taktilen oder berührungslosen ersten Abstandssensor 11A auf, der an dem vorderen Referenzpunkt 9 angeordnet ist, um den Abstand zwischen dem vorderen Referenzpunkt 9 und dem Leitdraht 8 zu messen. Die zweite Abstandsmesseinrichtung 12 weist einen taktilen oder berührungslosen zweiten Abstandssensor 12A auf, der an dem hinteren Referenzpunkt 10 angeordnet ist, um den Abstand zwischen dem hinteren Referenzpunkt und dem Leitdraht zu messen (Fig. 1). Es sei bemerkt, dass für die Steuerung der Antriebeinrichtung 5 die Anordnung des vorderen und hinteren Abstandssensors 11A, 12A grundsätzlich beliebig ist, solange die Abstandssensoren 11A, 12A in Arbeitsrichtung der Baumaschine auf der Höhe des vorderen bzw. hinteren Referenzpunktes 9, 10 liegen, da die geometrischen Abmessungen des Gleitschalungsfertigers bekannt sind. Die Abstandssensoren können daher auf einer quer zur Arbeitsrichtung verlaufenden Achse liegen, die durch den vorderen bzw. hinteren Referenzpunkt verläuft.

Die Steuer- und Recheneinheit 7 erzeugt Steuersignale für die nicht dargestellten Komponenten der Antriebseinrichtung 5, so dass für das linke und rechte Kettenlaufwerk 3A, 3B unterschiedliche Kettengeschwindigkeiten vorgegeben werden können. Diese Komponenten können hydraulische, pneumatische oder elektrische Komponenten umfassen. Die Steuer- und Recheneinheit 7 kann analoge oder digitale Schaltkreise umfassen. Sie kann beispielsweise einen allgemeinen Prozessor, einen digitalen Signalprozessor (DSP) zur kontinuierlichen Bearbeitung digitaler Signale, einen Mikroprozessor, eine anwendungsspezifische integrierte Schaltung (ASIC), einen aus Logikelementen bestehenden integrierten Schaltkreis (FPGA) oder andere integrierte Schaltkreise (IC) oder Hardware-Komponenten aufweisen. Auf den Hardware-Komponenten kann ein Datenverarbeitungsprogramm (Software) laufen, um die einzelnen Komponenten des Gleitschalungsfertigers ansteuern zu können.

Die Steuer- und Recheneinheit 7 ist derart konfiguriert, dass in Abhängigkeit von dem Abstand a zwischen dem in Bezug auf den Maschinenrahmen 1 in Arbeitsrichtung vorderen Referenzpunkt 9 und der vorgegebenen Bahn 8 die Kettengeschwindigkeit des linken Kettenlaufwerks 3A und/oder die Kettengeschwindigkeit des rechten Kettenlaufwerks 3B derart vorgegeben wird, dass sich der vordere Referenzpunkt 9 auf der vorgegebenen Bahn 8 bewegt.

Wenn sich bei einer Linkskurve der vordere Referenzpunkt 9 auf der kurveninneren Seite im Abstand zu der vorgegebenen Bahn 8 befindet, passt die Steuer- und Recheneinheit 7 die Kettengeschwindigkeiten des linken und rechten Kettenlaufwerks 3A, 3B derart an, dass sich das linke Laufwerk 3A schneller als das rechte Laufwerk 3B dreht und der Gleitschalungsfertiger nach rechtsschwenkt. Wenn sich bei einer Linkskurve der vordere Referenzpunkt 9 auf der kurvenäußeren Seite im Abstand zu der vorgegebenen Bahn 8 befindet, passt die Steuer- und Recheneinheit 7 die Kettengeschwindigkeiten des linken und rechten Kettenlaufwerks 3A, 3B derart an, dass sich das rechte Laufwerk 3B schneller als das linke Laufwerk 3A dreht und der Gleitschalungsfertiger nach links schwenkt. Folglich findet fortlaufend ein Vergleich zwischen einem Soll-Wert für den Abstand (0) und einem Ist-Wert (a) statt.

Wie die Figuren 3A bis 3D zeigen, führt die oben beschriebene Regelung dazu, dass der hintere Referenzpunkt 10 der Bahn 8 nicht folgt und der Abstand zwischen dem hinteren Referenzpunkt und der Bahn zunimmt. Bei einer Linkskurve bewegt sich der hintere Referenzpunkt auf die kurvenäußere, rechte Seite.

Während des Vorschubs des Gleitschalungsfertigers überwacht die zweite Abstandsmesseinrichtung 12 den Abstand b zwischen dem hinteren Referenzpunkt 10 und der vorgegebenen Bahn 8. Wenn sich der hintere Referenzpunkt 10 im Abstand b zu der Bahn 8 befindet, führt die Steuer- und Recheneinheit 7 eine Lenkkorrektur aus, um den hinteren Referenzpunkt wieder in Richtung der Bahn zu bewegen. Die Lenkkorrektur kann dadurch erfolgen, dass die Steuer- und Recheneinheit 7 in Abhängigkeit von dem Abstand b eine korrigierte Bahn 8' berechnet, die anstelle der vorgegebenen Bahn der Steuerung auf der Grundlage des vorderen Referenzpunktes zugrunde gelegt wird.

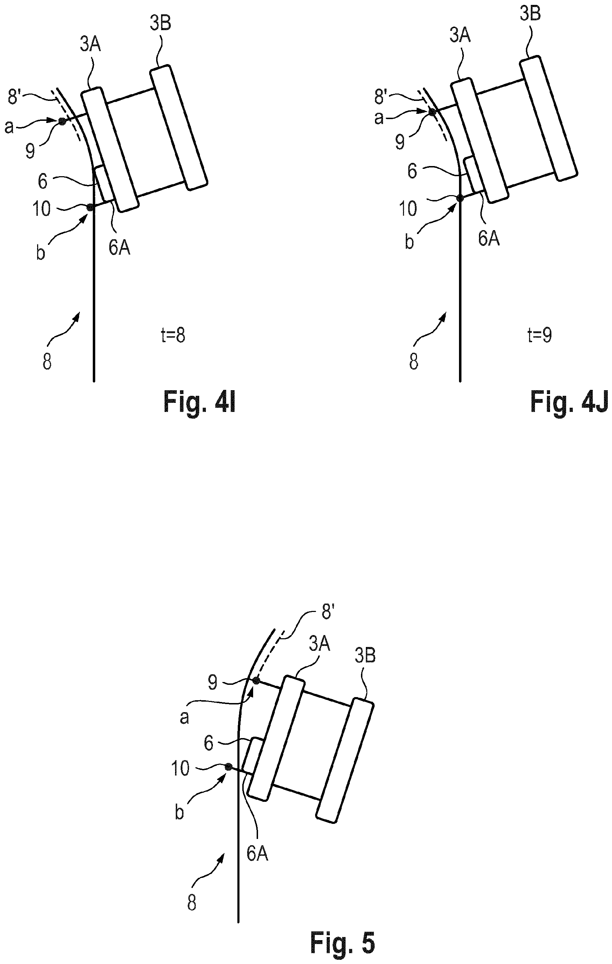

Wenn sich bei einer Linkskurve der hintere Referenzpunkt 10 im Abstand b zu der vorgegebenen Bahn auf der kurvenäußeren Seite befindet (Fig. 4C), d. h. die zweite Abstandsmesseinrichtung einen Abstand b misst, wird für den Sollwert-Istwert-Vergleich als Sollwert ein Wert festgelegt, den die Steuer- und Recheneinheit 7 durch Verrechnung, beispielsweise Multiplikation, des Abstandes b des hinteren Referenzpunktes10 von der vorgegebene Bahn 8 mit einem Korrekturfaktor bestimmt. Bei dem vorliegenden Ausführungsbeispiel wird als Korrekturfaktor 1 angenommen. Daraus ergibt sich für die Steuerung auf der Grundlage des vorderen Referenzpunktes 9 ein neuer korrigierter Sollwert für die Steuerung, der dem Abstand b des hinteren Referenzpunktes 10 von der vorgegebenen Bahn 8 entspricht. Folglich wird für die Steuerung ein Offset vorgegeben, der von dem Abstand b abhängig ist. Je größer der Abstand b desto größer der Offset. Die Vorgabe des Offsets führt dazu, dass die Steuer- und Recheneinheit 7 die Geschwindigkeit des kurvenäußeren, rechten Kettenlaufwerks 3B erhöht und/oder die Geschwindigkeit des kurveninneren, linken Kettenlaufwerks 3A verringert, so dass sich der vordere Referenzpunkt 9 auf die kurveninnere Seite bewegt. Dies führt dazu, sich der Abstand b des hinteren Referenzpunktes 10 und der vorgegebenen Bahn 8 verringert. Die Figuren zeigen, dass der Abstand der korrigierten Bahn 8' zu der vorgegebenen Bahn 8 abnimmt, wenn der Abstand des hinteren Referenzpunkt 10 zu der vorgegebenen Bahn 8 abnimmt. Wenn der hintere Referenzpunkt 10 wieder auf der vorgegebenen Bahn 8 liegt, findet eine Lenkkorrektur nicht mehr statt. In Fig. 4I und Fig.4J driftet der hintere Referenzpunkt im weiteren Verlauf auf die kurveninnere Seite ab, so dass eine Korrektur nach rechts erfolgen muss.

Bei der Fahrt in eine Rechtskurve ergeben sich analoge Verhältnisse. Fig 5 zeigt eine Rechtskurve, wobei der hintere Referenzpunkt 10 auf die kurvenäußere Seite, d. h. nach links, abdriftet. Folglich findet eine Lenkkorrektur dadurch statt, dass der Gleitschalungsfertiger nach rechts schwenkt.

Für die Steuerung können die unterschiedlichsten aus dem Stand der Technik bekannten Regler-Typen verwendet werden. Die entsprechenden Regelalgorithmen sind dem Fachmann bekannt.

Eine alternative Ausführungsform sieht vor, dass die Steuer- und Recheneinheit 7 einen ersten, vorderen und zweiten, hinteren GPS-Empfänger, vorzugsweise DGPS-Empfänger zum Empfangen von GPS-Satellitensignalen eines globalen Navigationssatellitensystems (GPS) aufweist. Ein Differenzielles Globales Positionierungssystem (DGPS) ermöglicht eine Steigerung der Genauigkeit durch das Ausstrahlen von Korrekturdaten mittels einer ortsfesten Referenzstation, deren exakte Position bekannt ist. Der vordere GPS-Empfänger GPS1 kann am vorderen Referenzpunkt und der hintere GPS-Empfänger GPS2 kann am hinteren Referenzpunkt anstelle des vorderen bzw. hinteren Abstandssensors 11A, 12A angeordnet sein, um die Positionen der Referenzpunkte zu bestimmen (Fig. 1). Bei dieser Ausführungsform wird der Leitdraht durch eine vorgegebene Bahn in einem von der Bewegung des Gleitschalungsfertigers unabhängigen GPS-Koordinatensystem ersetzt, wobei die Bahn in dem GPS-Koordinatensystem mit Positions- und Richtungsdaten beschrieben wird. Die Steuer- und Recheneinheit 7 ist bei diese Ausführungsform derart konfiguriert, dass aus die vorgegebene Bahn beschreibenden Daten und den Signalen des ersten GPS-Empfängers der Abstand a zwischen dem vorderen Referenzpunkt 9 und der vorgegebenen Bahn 8, und aus die vorgegebene Bahn beschreibenden Daten und den Signalen des zweiten GPS-Empfängers der Abstand b zwischen dem hinteren Referenzpunkt 10 und der vorgegebenen Bahn 8 ermittelt wird. Die Steuerung der Kettengeschwindigkeiten der beiden Kettenlaufwerke 3A, 3B erfolgt wie bei der ersten Ausführungsform.

Bei dem vorliegenden Ausführungsbeispiel sind der vordere und hintere GPS-Empfänger GPS1 und GPS2 aber nicht am vorderen oder hinteren Referenzpunkt angeordnet, sondern an einer grundsätzlich beliebigen Stelle. Fig. 1 zeigt den vorderen GPS-Empfänger GPS 1 im vorderen Bereich des Maschinenrahmens 1 und den hinteren GPS-Empfänger GPS2 im hinteren Bereich des Maschinenrahmens. Die Steuer- und Recheneinheit 7 ist derart konfiguriert, dass mittels des Globalen Positionierungssystems (DGPS) die Position des vorderen und hinteren GPS-Empfängers im GPS-Koordinatensystem und aus den Positionen des vorderen und hinteren GPS-Empfängers die Position und Ausrichtung der Baumaschine bestimmt werden. Mit der bekannten Geometrie der Baumaschine werden nunmehr die Positionen des vorderen und hinteren Referenzpunktes berechnet.

## Patentansprüche

1. Selbstfahrende Baumaschine, insbesondere Gleitschalungsfertiger, mit
einem Maschinenrahmen (1),
einer am Maschinenrahmen (1) angeordneten Arbeitseinrichtung,
einem einzigen in Arbeitsrichtung (A) linken Kettenlaufwerk (3A) und einem einzigen in Arbeitsrichtung rechten Kettenlaufwerk (3B),
einer Antriebseinrichtung (5) zum Antreiben des linken Kettenlaufwerks (3A) mit einer vorgegebenen Kettengeschwindigkeit und des rechten Kettenlaufwerks (3B) mit einer vorgegebenen Kettengeschwindigkeit,
einer Steuer- und Recheneinheit (7), die derart konfiguriert ist, dass in Abhängigkeit von einem Abstand (a) zwischen einem in Bezug auf den Maschinenrahmen (1) in Arbeitsrichtung vorderen Referenzpunkt (9) und einer vorgegebenen Bahn (8) die Kettengeschwindigkeit des linken Kettenlaufwerks (3A) und/oder die Kettengeschwindigkeit des rechten Kettenlaufwerks (3B) derart vorgegeben wird, dass sich der vordere Referenzpunkt (9) auf der vorgegebenen Bahn (8) bewegt,
**dadurch gekennzeichnet, dass**
die Steuer- und Recheneinheit (7) weiterhin derart konfiguriert ist, dass während einer Kurvenfahrt der Baumaschine in Abhängigkeit von einem Abstand (b) zwischen einem in Bezug auf den Maschinenrahmen (1) in Arbeitsrichtung hinteren Referenzpunkt (10) und der vorgegebenen Bahn (8) eine Korrektur der Steuerung derart vorgenommen wird, dass sich der Abstand (b) zwischen dem in Bezug auf den Maschinenrahmen (1) in Arbeitsrichtung (A) hinteren Referenzpunkt (10) und der vorgegebenen Bahn (8) verringert.

2. Selbstfahrende Baumaschine nach Anspruch 1, **dadurch gekennzeichnet, dass** die Steuer- und Recheneinheit (7) derart konfiguriert ist, dass während einer Kurvenfahrt der Baumaschine für die Steuerung der Baumaschine in Abhängigkeit von dem Abstand (a) zwischen einem in Bezug auf den Maschinenrahmen (1) in Arbeitsrichtung (A) vorderen Referenzpunkt (9) und einer vorgegebenen Bahn (8) eine korrigierte Bahn (8') angenommen wird, die zu der vorgegebenen Bahn (8) in einem Abstand verläuft, der von dem Abstand (b) zwischen dem in Bezug auf den Maschinenrahmen (1) in Arbeitsrichtung hinteren Referenzpunkt (10) und der vorgegebenen Bahn (8) abhängig ist.

3. Selbstfahrende Baumaschine nach Anspruch 2, **dadurch gekennzeichnet, dass** die Steuer- und Recheneinheit (7) derart konfiguriert ist, dass während einer Kurvenfahrt der Baumaschine für die Steuerung der Baumaschine in Abhängigkeit von dem Abstand (a) zwischen einem in Bezug auf den Maschinenrahmen (1) in Arbeitsrichtung (A) vorderen Referenzpunkt (9) und einer vorgegebenen Bahn (8) eine korrigierte Bahn (8') angenommen wird, die in einem vorgegebenen Abstand zu der vorgegebenen Bahn auf der kurveninneren Seite der vorgegebenen Bahn (8) verläuft.

4. Selbstfahrende Baumaschine nach einem der Ansprüche 1 bis 3, **dadurch gekennzeichnet, dass** der Abstand zwischen der korrigierten Bahn (8') und vorgegebenen Bahn (8) der mit einem Korrekturfaktor verrechnete Abstand (b) zwischen dem in Bezug auf den Maschinenrahmen (1) in Arbeitsrichtung (A) hinteren Referenzpunkt (10) und der vorgegebenen Bahn (8) ist.

5. Selbstfahrende Baumaschine nach einem der Ansprüche 1 bis 4, **dadurch gekennzeichnet, dass** die Steuer- und Recheneinheit (7) derart konfiguriert ist, dass während einer Kurvenfahrt der Baumaschine die Ansteuerung der Antriebseinrichtung (5) derart korrigiert wird, dass die Differenz der Kettengeschwindigkeiten des linken Kettenlaufwerks (3A) und des rechten Kettenlaufwerks (3B) in Abhängigkeit von dem Abstand (b) zwischen dem in Bezug auf den Maschinenrahmen (1) in Arbeitsrichtung (A) hinteren Referenzpunkt (10) und der vorgegebenen Bahn (8) verändert wird.

6. Selbstfahrende Baumaschine nach einem der Ansprüche 1 bis 5, **dadurch gekennzeichnet**, die Steuer- und Recheneinheit (7) derart konfiguriert ist, dass während der Fahrt in eine Linkskurve die Geschwindigkeit des rechten Kettenlaufwerks (3B) erhöht und/oder die Geschwindigkeit des linken Kettenlaufwerks (3A) verringert wird, und/oder die Steuer- und Recheneinheit (7) derart konfiguriert ist, dass während der Fahrt in eine Rechtskurve die Geschwindigkeit des linken Kettenlaufwerks (3A) erhöht und/oder die Geschwindigkeit des rechten Kettenlaufwerks (3B) verringert wird.

7. Selbstfahrende Baumaschine nach einem der Ansprüche 1 bis 6, **dadurch gekennzeichnet**, die Steuer- und Recheneinheit (7) eine erste Abstandsmesseinrichtung (11) aufweist, die einen ersten Abstandssensor (11A) aufweist, der an dem vorderen Referenzpunkt (9) angeordnet ist, wobei die erste Abstandsmesseinrichtung (11) derart ausgebildet ist, dass der Abstand (a) zwischen dem vorderen Referenzpunkt (9) und einem die vorgegebene Bahn (8) beschreibenden Leitdraht messbar ist, und die Steuer- und Recheneinheit (7) eine zweite Abstandsmesseinrichtung (12) aufweist, die einen zweiten Abstandssensor (12A) aufweist, der an dem hinteren Referenzpunkt (10) angeordnet ist, wobei die zweite Abstandsmesseinrichtung (12) derart ausgebildet ist, dass der Abstand (b) zwischen dem hinteren Referenzpunkt (10) und dem Leitdraht messbar ist.

8. Selbstfahrende Baumaschine nach einem der Ansprüche 1 bis 6, **dadurch gekennzeichnet**, die Steuer- und Recheneinheit (7) einen ersten GPS-Empfänger (GPS1) und einen zweiten GPS-Empfänger (GPS2) zum Empfangen von GPS-Satellitensignalen eines globalen Navigationssatellitensystems (GPS) aufweist, wobei die Steuer- und Recheneinheit (7) derart konfiguriert ist, dass mit dem ersten und zweiten GPS-Empfänger die Positionen des vorderen und hinteren Referenzpunktes (9) bestimmt werden, und die Steuer- und Recheneinheit (7) derart konfiguriert ist,
dass aus die vorgegebene Bahn beschreibenden Daten und der ermittelten Position des vorderen Referenzpunktes (9) der Abstand (a) zwischen dem vorderen Referenzpunkt (9) und der vorgegebenen Bahn (8), und aus die vorgegebene Bahn beschreibenden Daten und der Position des hinteren Referenzpunktes (10) der Abstand (b) zwischen dem hinteren Referenzpunkt (10) und der vorgegebenen Bahn (8) ermittelt wird.

9. Selbstfahrende Baumaschine nach einem der Ansprüche 1 bis 8, **dadurch gekennzeichnet**, die Baumaschine ein Gleitschalungsfertiger ist und die Arbeitseinrichtung eine Gleitschalung (6) ist, wobei der hintere Referenzpunkt (10) auf der Höhe des in Arbeitsrichtung hinteren Ende (6A) der Gleitschalung (6) liegt.

10. Verfahren zum Steuern einer selbstfahrenden Baumaschine, insbesondere Gleitschalungsfertiger, nach einem der Ansprüche 1 bis 9,
wobei in Abhängigkeit von dem Abstand (a) zwischen einem in Bezug auf den Maschinenrahmen in Arbeitsrichtung (A) vorderen Referenzpunkt (9) und einer vorgegebenen Bahn (8) die Kettengeschwindigkeit des linken Kettenlaufwerks und/oder die Kettengeschwindigkeit des rechten Kettenlaufwerks von der Steuerund Recheneinheit derart vorgegeben wird, dass sich der vordere Referenzpunkt (9) auf der vorgegebenen Bahn (8) bewegt,
**dadurch gekennzeichnet, dass**
während einer Kurvenfahrt der Baumaschine in Abhängigkeit von dem Abstand (b) zwischen einem in Bezug auf den Maschinenrahmen in Arbeitsrichtung (A) hinteren Referenzpunkt (10) und der vorgegebenen Bahn (8) von der Steuer- und Recheneinheit eine Korrektur der Steuerung derart vorgenommen wird, dass sich der Abstand (b) zwischen dem in Bezug auf den Maschinenrahmen (1) in Arbeitsrichtung (A) hinteren Referenzpunkt (10) und der vorgegebenen Bahn (8) verringert.

11. Verfahren nach Anspruch 10, **dadurch gekennzeichnet, dass** während einer Kurvenfahrt der Baumaschine für die Steuerung der Baumaschine in Abhängigkeit von dem Abstand (a) zwischen einem in Bezug auf den Maschinenrahmen in Arbeitsrichtung (A) vorderen Referenzpunkt (9) und einer vorgegebenen Bahn (8) eine korrigierte Bahn (8') angenommen wird, die zu der vorgegebenen Bahn (8) in einem Abstand verläuft, der von dem Abstand (b) zwischen dem in Bezug auf den Maschinenrahmen in Arbeitsrichtung (A) hinteren Referenzpunkt (10) und der vorgegebenen Bahn (8) abhängig ist.

12. Verfahren nach Anspruch 11, **dadurch gekennzeichnet, dass** während einer Kurvenfahrt der Baumaschine für die Steuerung der Baumaschine in Abhängigkeit von dem Abstand (a) zwischen einem in Bezug auf den Maschinenrahmen in Arbeitsrichtung (A) vorderen Referenzpunkt (9) und einer vorgegebenen Bahn (8) eine korrigierte Bahn (8') angenommen wird, die in einem Abstand zu der vorgegebenen Bahn (8) auf der kurveninneren Seite der vorgegebenen Bahn verläuft.

13. Verfahren nach einem der Ansprüche 10 bis 12, **dadurch gekennzeichnet, dass** der Abstand zwischen der korrigierten Bahn (8') und vorgegebenen Bahn (8) der mit einem Korrekturfaktor verrechnete Abstand (b) zwischen dem in Bezug auf den Maschinenrahmen in Arbeitsrichtung (A) hinteren Referenzpunkt (10) und der vorgegebenen Bahn (8) ist.

14. Verfahren nach einem der Ansprüche 10 bis 13, **dadurch gekennzeichnet, dass** während einer Kurvenfahrt der Baumaschine von der Steuer- und Recheneinheit die Differenz der Geschwindigkeiten des linken Kettenlaufwerks und des rechten Kettenlaufwerks in Abhängigkeit von dem Abstand (b) zwischen dem in Bezug auf den Maschinenrahmen in Arbeitsrichtung (A) hinteren Referenzpunkt (10) und der vorgegebenen Bahn (8) verändert wird.

15. Verfahren nach einem der Ansprüche 10 bis 14, **dadurch gekennzeichnet, dass** während der Fahrt in eine Linkskurve von der Steuer- und Recheneinheit die Geschwindigkeit des rechten Kettenlaufwerks (3B) erhöht und/oder die Geschwindigkeit des linken Kettenlaufwerks (3A) verringert wird, und/oder während der Fahrt in eine Rechtskurve von der Steuer- und Recheneinheit die Geschwindigkeit des linken Kettenlaufwerks (3A) erhöht und/oder die Geschwindigkeit des rechten Kettenlaufwerks (3B) verringert wird.

16. Verfahren nach einem der Ansprüche 10 bis 15, **dadurch gekennzeichnet, dass** der Abstand (a) zwischen dem vorderen Referenzpunkt (9) und einem die vorgegebene Bahn beschreibenden Leitdraht gemessen wird, und der Abstand zwischen dem hinteren Referenzpunkt (10) und dem Leitdraht gemessen wird.

17. Verfahren nach einem der Ansprüche 10 bis 15, **dadurch gekennzeichnet, dass** aus die vorgegebene Bahn beschreibenden Daten und den Signalen eines ersten und eines zweiten GPS-Empfängers (GPS1, GPS2) zum Empfangen von Signalen eines globalen Navigationssatellitensystems (GPS) der Abstand (a) zwischen dem vorderen Referenzpunkt (9) und der vorgegebenen Bahn (8), und aus die vorgegebene Bahn beschreibenden Daten und den Signalen des ersten und zweiten GPS-Empfängers (GPS1, GPS2) zum Empfangen von GPS-Signalen eines globalen Navigationssatellitensystems (GPS) der Abstand (b) zwischen dem hinteren Referenzpunkt (10) und der vorgegebenen Bahn (8) von der Steuer- und Recheneinheit ermittelt wird.

18. Verfahren nach einem der Ansprüche 10 bis 17, **dadurch gekennzeichnet, dass** die Baumaschine ein Gleitschalungsfertiger ist und die Arbeitseinrichtung eine Gleitschalung (6) ist, wobei der hintere Referenzpunkt (10) auf der Höhe des in Arbeitsrichtung (A) hinteren Ende (6A) der Gleitschalung (6) liegt.

## Claims

1. Self-propelled construction machine, in particular a slipform paver, comprising
a machine frame (1),
a working means arranged on the machine frame (1),
a single crawler track (3A) on the left in the working direction (A) and a single crawler track (3B) on the right in the working direction,
a drive means (5) for driving the left crawler track (3A) at a predetermined chain speed and the right crawler track (3B) at a predetermined chain speed,
a control and arithmetic unit (7) which is configured such that, on the basis of a distance (a) between a front reference point (9) with respect to the machine frame (1) in the working direction and a predetermined path (8), the chain speed of the left crawler track (3A) and/or the chain speed of the right crawler track (3B) is predetermined such that the front reference point (9) moves on the predetermined path (8),
**characterised in that**
the control and arithmetic unit (7) is further configured such that, during cornering of the construction machine, the control is corrected on the basis of a distance (b) between a rear reference point (10) with respect to the machine frame (1) in the working direction and the predetermined path (8) such that the distance (b) between the rear reference point (10) with respect to the machine frame (1) in the working direction (A) and the predetermined path (8) reduces.

2. Self-propelled construction machine according to claim 1, **characterised in that** the control and arithmetic unit (7) is configured such that, during cornering of the construction machine, a corrected path (8') which extends at a distance from the predetermined path (8) that depends on the distance (b) between the rear reference point (10) with respect to the machine frame (1) in the working direction and the predetermined path (8) is assumed for the control of the construction machine on the basis of the distance (a) between a front reference point (9) with respect to the machine frame (1) in the working direction (A) and a predetermined path (8).

3. Self-propelled construction machine according to claim 2, **characterised in that** the control and arithmetic unit (7) is configured such that, during cornering of the construction machine, a corrected path (8') which extends at a predetermined distance from the predetermined path on the inside of the curve of the predetermined path (8) is assumed for the control of the construction machine on the basis of the distance (a) between a front reference point (9) with respect to the machine frame (1) in the working direction (A) and a predetermined path (8).

4. Self-propelled construction machine according to any of claims 1 to 3, **characterised in that** the distance between the corrected path (8') and the predetermined path (8) is the distance (b), calculated with a correction factor, between the rear reference point (10) with respect to the machine frame (1) in the working direction (A) and the predetermined path (8).

5. Self-propelled construction machine according to any of claims 1 to 4, **characterised in that** the control and arithmetic unit (7) is configured such that, during cornering of the construction machine, the actuation of the drive means (5) is corrected such that the difference in the chain speeds of the left crawler track (3A) and the right crawler track (3B) is altered on the basis of the distance (b) between the rear reference point (10) with respect to the machine frame (1) in the working direction (A) and the predetermined path (8).

6. Self-propelled construction machine according to any of claims 1 to 5, **characterised in that** the control and arithmetic unit (7) is configured such that, when driving into a left-hand curve, the speed of the right crawler track (3B) is increased and/or the speed of the left crawler track (3A) is reduced, and/or the control and arithmetic unit (7) is configured such that, when driving into a right-hand curve, the speed of the left crawler track (3A) is increased and/or the speed of the right crawler track (3B) is reduced.

7. Self-propelled construction machine according to any of claims 1 to 6, **characterised in that** the control and arithmetic unit (7) has a first distance measuring means (11) which has a first distance sensor (11A) which is arranged at the front reference point (9), the first distance measuring means (11) being designed such that the distance (a) between the front reference point (9) and a guide wire describing the predetermined path (8) can be measured, and the control and arithmetic unit (7) has a second distance measuring means (12), which has a second distance sensor (12A) which is arranged at the rear reference point (10), the second distance measuring means (12) being designed such that the distance (b) between the rear reference point (10) and the guide wire can be measured.

8. Self-propelled construction machine according to any of claims 1 to 6, **characterised in that** the control and arithmetic unit (7) has a first GPS receiver (GPS1) and a second GPS receiver (GPS2) for receiving GPS satellite signals from a global navigation satellite system (GPS), the control and arithmetic unit (7) being configured such that the positions of the front and rear reference point (9) are determined by means of the first and second GPS receiver, and the control and arithmetic unit (7) is configured such
that the distance (a) between the front reference point (9) and the predetermined path (8) is determined from data describing the predetermined path and the determined position of the front reference point (9), and the distance (b) between the rear reference point (10) and the predetermined path (8) is determined from data describing the predetermined path and the position of the rear reference point (10).

9. Self-propelled construction machine according to any of claims 1 to 8, **characterised in that** the construction machine is a slipform paver and the working means is a slipform (6), the rear reference point (10) lying at the level of the rear end (6A) of the slipform (6) in the working direction.

10. Method for controlling a self-propelled construction machine, in particular a slipform paver, according to any of claims 1 to 9,wherein, on the basis of the distance (a) between a front reference point (9) with respect to the machine frame in the working direction (A) and a predetermined path (8), the chain speed of the left crawler track and/or the chain speed of the right crawler track being predetermined from the control and arithmetic unit such that the front reference point (9) moves on the predetermined path (8),
**characterised in that**,
during cornering of the construction machine, the control is corrected from the control and arithmetic unit on the basis of the distance (b) between a rear reference point (10) with respect to the machine frame in the working direction (A) and the predetermined path (8) such that the distance (b) between the rear reference point (10) with respect to the machine frame (1) in the working direction (A) and the predetermined path (8) reduces.

11. Method according to claim 10, **characterised in that**, during cornering of the construction machine, a corrected path (8') which extends at a distance from the predetermined path (8) that depends on the distance (b) between the rear reference point (10) with respect to the machine frame in the working direction (A) and the predetermined path (8) is assumed for the control of the construction machine on the basis of the distance (a) between a front reference point (9) with respect to the machine frame in the working direction (A) and a predetermined path (8).

12. Method according to claim 11, **characterised in that**, during cornering of the construction machine, a corrected path (8') which extends at a distance from the predetermined path (8) on the inside of the curve of the predetermined path is assumed for the control of the construction machine on the basis of the distance (a) between a front reference point (9) with respect to the machine frame in the working direction (A) and a predetermined path (8).

13. Method according to any of claims 10 to 12, **characterised in that** the distance between the corrected path (8') and the predetermined path (8) is the distance (b), calculated with a correction factor, between the rear reference point (10) with respect to the machine frame in the working direction (A) and the predetermined path (8).

14. Method according to any of claims 10 to 13, **characterised in that**, during cornering of the construction machine, the difference in the speeds of the left crawler track and the right crawler track is altered from the control and arithmetic unit on the basis of the distance (b) between the rear reference point (10) with respect to the machine frame in the working direction (A) and the predetermined path (8).

15. Method according to any of claims 10 to 14, **characterised in that**, when driving into a left-hand curve, the speed of the right crawler track (3B) is increased from the control and arithmetic unit and/or the speed of the left crawler track (3A) is reduced, and/or, when driving into a right-hand curve, the speed of the left crawler track (3A) is increased from the control and arithmetic unit and/or the speed of the right-hand crawler track (3B) is reduced.

16. Method according to any of claims 10 to 15, **characterised in that** the distance (a) between the front reference point (9) and a guide wire describing the predetermined path is measured, and the distance between the rear reference point (10) and the guide wire is measured.

17. Method according to any of claims 10 to 15, **characterised in that** the distance (a) between the front reference point (9) and the predetermined path (8) is determined from data describing the predetermined path and the signals from a first and a second GPS receiver (GPS1, GPS2) for receiving signals from a global navigation satellite system (GPS), and the distance (b) between the rear reference point (10) and the predetermined path (8) is determined from the control and arithmetic unit from data describing the predetermined path and the signals from the first and second GPS receiver (GPS1, GPS2) for receiving GPS signals from a global navigation satellite system (GPS).

18. Method according to any of claims 10 to 17, **characterised in that** the construction machine is a slipform paver and the working means is a slipform (6), the rear reference point (10) lying at the level of the rear end (6A) of the slipform (6) in the working direction (A).

## Revendications

1. Engin de construction autopropulsé, en particulier finisseur à coffrages glissants, avec
un bâti d'engin (1),
un dispositif de travail agencé au niveau du bâti d'engin (1),
un seul mécanisme de roulement à chaîne gauche (3A) dans le sens de travail (A) et un seul mécanisme de roulement à chaîne droit (3b) dans le sens de travail,
un dispositif d'entraînement (5) pour l'entraînement du mécanisme de roulement à chaîne gauche (3A) avec une vitesse de chaîne prédéfinie et du mécanisme de roulement à chaîne droit (3B) avec une vitesse de chaîne prédéfinie,
une unité de commande et de calcul (7) qui est configurée de telle manière qu'en fonction d'une distance (a) entre un point de référence avant (9) par rapport au bâti d'engin (1) dans le sens de travail et une voie prédéfinie (8), la vitesse de chaîne du mécanisme de roulement à chaîne gauche (3A) et/ou la vitesse de chaîne du mécanisme de roulement à chaîne droit (3B) soit prédéfinie de telle manière que le point de référence avant (9) se déplace sur la voie prédéfinie (8), **caractérisé en ce que**
l'unité de commande et de calcul (7) est en outre configurée de telle manière que pendant un déplacement en virage de l'engin de construction, une correction de la commande soit entreprise en fonction d'une distance (b) entre un point de référence arrière (10) par rapport au bâti d'engin (1) dans le sens de travail et la voie prédéfinie (8) de telle manière que la distance (b) entre le point de référence arrière (10) par rapport au bâti d'engin (1) dans le sens de travail (A) et la voie prédéfinie (8) diminue.

2. Engin de construction autopropulsé selon la revendication 1, **caractérisé en ce que** l'unité de commande et de calcul (7) est configurée de telle manière que pendant un déplacement en virage de l'engin de construction une voie corrigée (8') est adoptée pour la commande de l'engin de construction en fonction de la distance (a) entre un point de référence avant (9) par rapport au bâti d'engin (1) dans le sens de travail (A) et une voie prédéfinie (8), ladite voie corrigée (8') s'étendant par rapport à la voie prédéfinie (8) à une distance qui dépend de la distance (b) entre le point de référence arrière (10) par rapport au bâti d'engin (1) dans le sens de travail et la voie prédéfinie (8).

3. Engin de construction autopropulsé selon la revendication 2, **caractérisé en ce que** l'unité de commande et de calcul (7) est configurée de telle manière que pendant un déplacement en virage de l'engin de construction une voie corrigée (8') est adoptée pour la commande de l'engin de construction en fonction de la distance (a) entre un point de référence avant (9) par rapport au bâti d'engin (1) dans le sens de travail (A) et une voie prédéfinie (8), ladite voie corrigée (8') s'étendant à une distance prédéfinie par rapport à la voie prédéfinie sur le côté intérieur au virage de la voie prédéfinie (8).

4. Engin de construction autopropulsé selon l'une quelconque des revendications 1 à 3, **caractérisé en ce que** la distance entre la voie corrigée (8') et la voie prédéfinie (8) est la distance (b) compensée avec un facteur de correction entre le point de référence arrière (10) par rapport au bâti d'engin (1) dans le sens de travail (A) et la voie prédéfinie (8).

5. Engin de construction autopropulsé selon l'une quelconque des revendications 1 à 4, **caractérisé en ce que** l'unité de commande et de calcul (7) est configurée de telle manière que pendant un déplacement en virage de l'engin de construction, la commande du dispositif d'entraînement (5) soit corrigée de telle manière que la différence des vitesses de chaîne du mécanisme de roulement à chaîne gauche (3A) et du mécanisme de roulement à chaîne droit (3B) soit modifiée en fonction de la distance (b) entre le point de référence arrière (10) par rapport au bâti d'engin (1) dans le sens de travail (A) et la voie prédéfinie (8).

6. Engin de construction autopropulsé selon l'une quelconque des revendications 1 à 5, **caractérisé en ce que** l'unité de commande et de calcul (7) est configurée de telle manière que pendant le déplacement dans un virage gauche, la vitesse du mécanisme de roulement à chaîne droit (3B) soit augmentée et/ou la vitesse du mécanisme de roulement à chaîne gauche (3A) soit diminuée, et/ou l'unité de commande et de calcul (7) est configurée de telle manière que pendant le déplacement dans un virage droit, la vitesse du mécanisme de roulement à chaîne gauche (3A) soit augmentée et/ou la vitesse du mécanisme de roulement à chaîne droit (3B) soit diminuée.

7. Engin de construction autopropulsé selon l'une quelconque des revendications 1 à 6, **caractérisé en ce que** l'unité de commande et de calcul (7) présente un premier dispositif de mesure de distance (11) qui présente un premier capteur de distance (11A) qui est agencé au niveau du point de référence avant (9), dans lequel le premier dispositif de mesure de distance (11) est réalisé de telle manière que la distance (a) entre le point de référence avant (9) et un fil guide décrivant la voie prédéfinie (8) soit mesurable, et l'unité de commande et de calcul (7) présente un second dispositif de mesure de distance (12) qui présente un second capteur de distance (12A) qui est agencé au niveau du point de référence arrière (10), dans lequel le second dispositif de mesure de distance (12) est réalisé de telle manière que la distance (b) entre le point de référence arrière (10) et le fil guide soit mesurable.

8. Engin de construction autopropulsé selon l'une quelconque des revendications 1 à 6, **caractérisé en ce que** l'unité de commande et de calcul (7) présente un premier récepteur GPS (GPS1) et un second récepteur GPS (GPS2) pour la réception de signaux satellite GPS d'un système de navigation par satellite global (GPS), dans lequel l'unité de commande et de calcul (7) est configurée de telle manière qu'avec les premier et second récepteurs GPS, les positions du point de référence avant et arrière (9) soient déterminées, et l'unité de commande et de calcul (7) est configurée de telle manière
qu'à partir des données décrivant la voie prédéfinie et la position déterminée du point de référence avant (9), la distance (a) entre le point de référence avant (9) et la voie prédéfinie (8), et à partir des données décrivant la voie prédéfinie et la position du point de référence arrière (10), la distance (b) entre le point de référence arrière (10) et la voie prédéfinie (8) soient déterminées.

9. Engin de construction autopropulsé selon l'une quelconque des revendications 1 à 8, **caractérisé en ce que** l'engin de construction est un finisseur à coffrages glissants et le dispositif de travail est un coffrage glissant (6), dans lequel le point de référence arrière (10) se trouve à hauteur de l'extrémité arrière (6A) dans le sens de travail du coffrage glissant (6).

10. Procédé de commande d'un engin de construction autopropulsé, en particulier finisseur à coffrages glissants, selon l'une quelconque des revendications 1 à 9, dans lequel en fonction de la distance (a) entre un point de référence avant (9) par rapport au bâti d'engin dans le sens de travail (A) et une voie prédéfinie (8), la vitesse de chaîne du mécanisme de roulement à chaîne gauche et/ou la vitesse de chaîne du mécanisme de roulement à chaîne droit est prédéfinie par l'unité de commande et de calcul de telle manière que le point de référence avant (9) se déplace sur la voie prédéfinie (8),
**caractérisé en ce que**
pendant un déplacement en virage de l'engin de construction, une correction de la commande est entreprise en fonction de la distance (b) entre un point de référence arrière (10) par rapport au bâti d'engin dans le sens de travail (A) et la voie prédéfinie (8) par l'unité de commande et de calcul de telle manière que la distance (b) diminue entre le point de référence arrière (10) par rapport au bâti d'engin (1) dans le sens de travail (A) et la voie prédéfinie (8).

11. Procédé selon la revendication 10, **caractérisé en ce que** pendant un déplacement en virage de l'engin de construction, une voie corrigée (8') est adoptée pour la commande de l'engin de construction en fonction de la distance (a) entre un point de référence avant (9) par rapport au bâti d'engin dans le sens de travail (A) et une voie prédéfinie (8), ladite voie corrigée (8') s'étendant à une distance par rapport à la voie prédéfinie (8), laquelle dépend de la distance (b) entre le point de référence arrière (10) par rapport au bâti d'engin dans le sens de travail (A) et la voie prédéfinie (8).

12. Procédé selon la revendication 11, **caractérisé en ce que** pendant un déplacement en virage de l'engin de construction, une voie corrigée (8') est adoptée pour la commande de l'engin de construction en fonction de la distance (a) entre un point de référence avant (9) par rapport au bâti d'engin dans le sens de travail (A) et une voie prédéfinie (8), ladite voie corrigée (8') s'étendant à une distance par rapport à la voie prédéfinie (8) sur le côté intérieur au virage de la voie prédéfinie.

13. Procédé selon l'une quelconque des revendications 10 à 12, **caractérisé en ce que** la distance entre la voie corrigée (8') et la voie prédéfinie (8) est la distance (b) compensée avec un facteur de correction entre le point de référence arrière (10) par rapport au bâti d'engin dans le sens de travail (A) et la voie prédéfinie (8).

14. Procédé selon l'une quelconque des revendications 10 à 13, **caractérisé en ce que** pendant un déplacement en virage de l'engin de construction, la différence des vitesses du mécanisme de roulement à chaîne gauche et du mécanisme de roulement à chaîne droit est modifiée en fonction de la distance (b) entre le point de référence arrière (10) par rapport au bâti d'engin dans le sens de travail (A) et la voie prédéfinie (8) par l'unité de commande et de calcul.

15. Procédé selon l'une quelconque des revendications 10 à 14, **caractérisé en ce que** pendant le déplacement dans un virage gauche, la vitesse du mécanisme de roulement à chaîne droit (3B) est augmentée et/ou la vitesse du mécanisme de roulement à chaîne gauche (3A) est diminuée par l'unité de commande et de calcul, et/ou pendant le déplacement dans un virage droit, la vitesse du mécanisme de roulement à chaîne gauche (3A) est augmentée et/ou la vitesse du mécanisme de roulement à chaîne droit (3B) est diminuée par l'unité de commande et de calcul.

16. Procédé selon l'une quelconque des revendications 10 à 15, **caractérisé en ce que** la distance (a) entre le point de référence avant (9) et un fil guide décrivant la voie prédéfinie est mesurée, et la distance entre le point de référence arrière (10) et le fil guide est mesurée.

17. Procédé selon l'une quelconque des revendications 10 à 15, **caractérisé en ce qu'**à partir des données décrivant la voie prédéfinie et les signaux d'un premier et d'un second récepteur GPS (GPS1, GPS2) pour la réception de signaux d'un système de navigation par satellite global (GPS), la distance (a) entre le point de référence avant (9) et la voie prédéfinie (8), et à partir des données décrivant la voie prédéfinie et les signaux du premier et du second récepteur GPS (GPS1, GPS2) pour la réception de signaux GPS d'un système de navigation par satellite global (GPS) la distance (b) entre le point de référence arrière (10) et la voie prédéfinie (8) sont déterminées par l'unité de commande et de calcul.

18. Procédé selon l'une quelconque des revendications 10 à 17, **caractérisé en ce que** l'engin de construction est un finisseur à coffrages glissants et le dispositif de travail est un coffrage glissant (6), dans lequel le point de référence arrière (10) se trouve à hauteur de l'extrémité arrière (6A) dans le sens de travail (A) du coffrage glissant (6).
